# EUROPEAN PATENT APPLICATION

(11) **EP 4 715 996 A1**
(43) Date of publication of application: **25.03.2026**
(21) Application number: 24819619.8
(22) Date of filing: 07.06.2024
(51) Int. Cl.: H01M 50/46, H01M 10/0585, H01M 50/446, H01M 10/0525

(54) **ELECTRODE ASSEMBLY AND ELECTROCHEMICAL DEVICE INCLUDING SAME**

(30) Priority: 08.06.2023 KR 20230073675
(71) Applicant: LG Chem, Ltd., Seoul 07336 (KR)
(72) Inventor: KWON, Hyok-Joon, Daejeon 34122 (KR); LEE, Joo-Sung, Daejeon 34122 (KR); LEE, Eun-Tae, Daejeon 34122 (KR)
(74) Representative: Hoffmann Eitle
(86) International application number: PCT/KR2024/007822
(87) International publication number: WO 2024/253468

(57) **Abstract**

The present disclosure provides an electrode assembly and a method for manufacturing the same, the electrode assembly having an adhesive portion in a predetermined region of an interface between a separator and an electrode, thereby improving a phenomenon of separation between the separator and the electrode and a phenomenon of short circuit between the electrodes. The electrode assembly of the present disclosure comprises an electrode, a separator, and a counter electrode, wherein the electrode and the counter electrode each include a tab extending from a current collector, and at least one surface of an interface between the separator and at least one of the electrode and the counter electrode includes an adhesive portion formed in at least one end region in a direction in which the tab of the electrode is located.

## Description

### Technical Field

The present disclosure relates to an electrode assembly including an adhesive portion, and an electrochemical device including the same.

### Background Art

As technological development and demand for mobile devices increase, demand for secondary batteries as an energy source is rapidly increasing. Recently, the use of secondary batteries as power sources for electric vehicles (EV), hybrid electric vehicles (HEV) and the like is being realized. Accordingly, extensive studies on secondary batteries capable of responding to various demands are being conducted.

Particularly, demand for lithium secondary batteries having high energy density, high discharge voltage and output stability is high, and among these, lithium secondary batteries used as power sources for electric vehicles and hybrid electric vehicles are required to have high output properties capable of generating a large output in a short period of time. In order to use such lithium secondary batteries, there is ongoing interest in improving safety of the batteries.

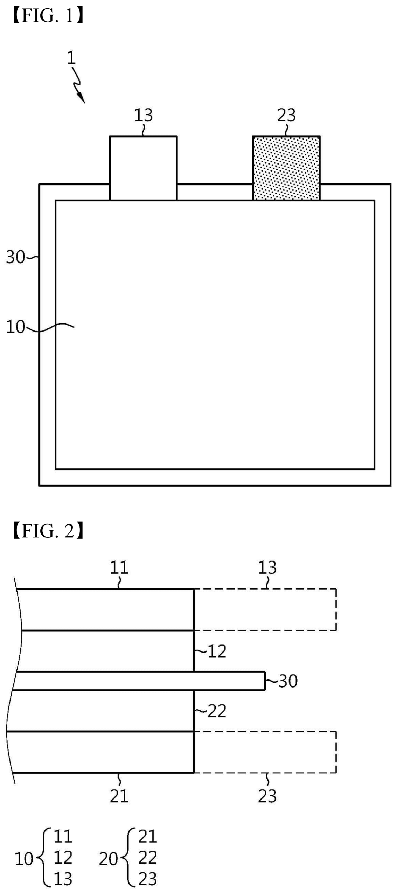

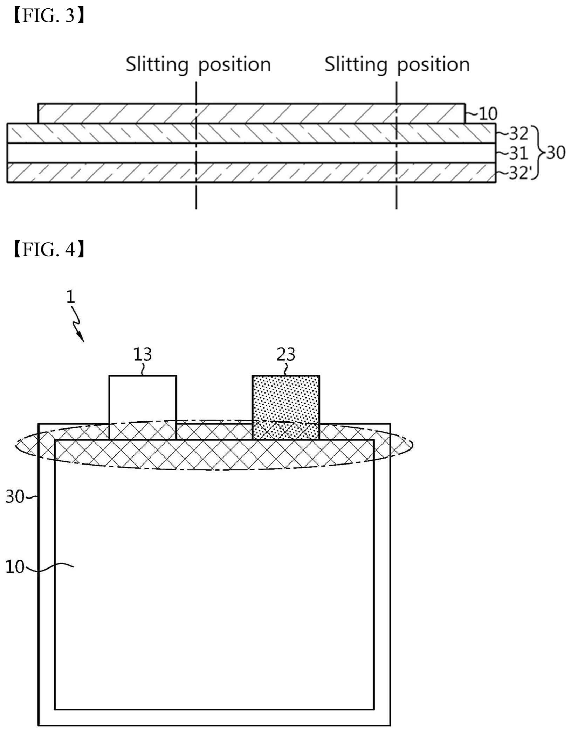

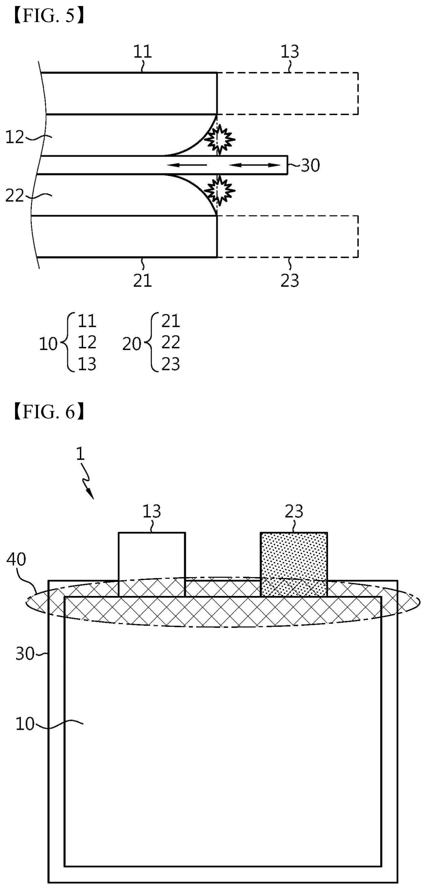

FIG. 1 illustrates a top view of an electrode assembly having an existing structure, and FIG. 2 illustrates a cross-sectional view of an electrode assembly having an existing structure. Meanwhile, a secondary battery is typically manufactured through a lamination process in the order of positive electrode current collector/positive electrode/separator/negative electrode/negative electrode current collector, followed by a cross-section slitting process. Herein, referring to FIGS. 4 and 5, the laminated secondary battery experiences a phenomenon of electrode collapse during continuous charge and discharge due to electrical behavior at an interface between the electrode and the separator, and interfacial separation between the electrode and the separator in the corresponding area (hatched area), and as a result, precipitates such as dead Li are generated, and secondary battery swelling, and decreases in battery stability and performance are caused due to the precipitates.

### DISCLOSURE

### Technical Problem

Accordingly, the present disclosure aims to solve the above-described problems, and
is directed to providing an electrode assembly that effectively resolves a phenomenon of separation between an electrode and a separator, a method for manufacturing the electrode assembly, and an electrochemical device including the same.

Particularly, the present disclosure is directed to providing an electrode assembly that effectively resolves a problem of short circuit between a positive electrode and a negative electrode, a method for manufacturing the electrode assembly, and an electrochemical device including the same.

Particularly, the method for manufacturing the electrode assembly of the present disclosure is directed to effectively improving a phenomenon of separation between an electrode and a separator occurring at a slitting position.

### Technical Solution

In order to resolve these problems,
according to one aspect of the present disclosure, there is provided an electrode assembly of the following embodiments.

The electrode assembly according to a first embodiment is
an electrode assembly including: an electrode; a separator; and a counter electrode,
wherein the electrode and the counter electrode each include a tab extending from a current collector, and at least one surface of an interface between the separator and at least one of the electrode and the counter electrode includes an adhesive portion formed in at least one end region in a direction in which the tab of the electrode is located.

According to a second embodiment, in the first embodiment,
an adhesive portion, which is formed in each of one end region in a direction in which the tab of the electrode is located on the interface between the electrode and the separator and one end region in a direction in which the tab of the counter electrode is located on the interface between the counter electrode and the separator, may be included.

According to a third embodiment, in the first or second embodiment,
the adhesive portion may be formed in a 10% width region from one end based on 100% of the total width of the separator.

According to a fourth embodiment, in any one embodiment of the first embodiment to the third embodiment,
the separator may have a total width of 5 mm to 800 mm.

According to a fifth embodiment, in any one of the first to fourth embodiments,
the adhesive portion may have a thickness of 0.5 µm to 2 µm.

According to a sixth embodiment, in any one of the first to fifth embodiments,
the separator includes: a polymer substrate; and a porous coating layer formed on at least one surface of the polymer substrate and including inorganic particles and a binder, and the adhesive portion may be formed on a partial region of a surface of the porous coating layer.

According to another aspect of the present disclosure, there is provided a method for manufacturing an electrode assembly of the following embodiments.

The method for manufacturing an electrode assembly according to a seventh embodiment includes:
(S1) forming an adhesive portion spaced apart at a predetermined interval on at least one surface of a separator film;
(S2) positioning an electrode on the adhesive portion-formed surface;
(S3) slitting the adhesive portion-formed region; and
(S4) forming a tab by notching in the region of the slit electrode in contact with the adhesive portion.

According to an eighth embodiment, in the seventh embodiment,
step (S1) may include forming an adhesive portion on each of both surfaces of the separator, and step (S2) may include positioning an electrode and a counter electrode on both surfaces of the adhesive portion-formed separator.

According to still another aspect of the present disclosure, there is provided an electrochemical device of the following embodiment.

The electrochemical device according to a ninth embodiment includes
the electrode assembly according to any one of the first to sixth embodiments stored in a case.

### Advantageous Effects

An electrode assembly according to one embodiment of the present disclosure has a structure of separator/adhesive portion/electrode provided in a slitting region during a process for manufacturing the electrode assembly, and thereby exhibits the effect of effectively preventing or improving a phenomenon of separation between the separator and the electrode in the slitting region. Accordingly, an effect of suppressing an occurrence of short circuit (short) between electrodes can be obtained.

Accordingly, advantageous effects can be obtained in reducing the risks of secondary battery swelling and decreases in battery stability and performance caused by precipitates generated in the site of separation between the electrode and the separator.

### Brief Description of Drawings

FIG. 1 illustrates a basic structure of an existing electrode assembly. The electrode assembly 1 includes: an electrode 10; a separator 30; and a counter electrode (not shown), and the electrode and the counter electrode may each include a tab 13, 23 extending from a current collector.
FIG. 2 illustrates a cross-sectional view of a basic structure of an existing electrode assembly. The electrode assembly includes: a positive electrode 10; a negative electrode 20; and a separator 30 interposed between the positive electrode and the negative electrode, and the positive electrode and the negative electrode may each include a current collector 11, 21, an active material layer 12, 22 and a tab 13, 23 extending from the current collector.
FIG. 3 illustrates a schematic view of a lamination process when manufacturing an existing electrode assembly. The electrode assembly may be manufactured through a process of forming an electrode 10 on a separator 30 including a porous substrate 31 and porous coating layers 32, 32', followed by slitting.
FIG. 4 illustrates a schematic view of a region where a phenomenon of electrode collapse, which occurs in an existing electrode assembly, appears. For example, the electrode assembly 1 may experience electrode collapse and separator-electrode separation (hatched area) in one end region of an interface between the separator 30 and the electrode 10 in a direction in which a tab 13, 23 is located.
FIG. 5 illustrates a schematic view of a cross-section of a region where separation between a separator and an electrode occurs in an existing electrode assembly.
FIG. 6 illustrates a top view of an electrode assembly according to one embodiment of the present disclosure. The electrode assembly 1 according to one embodiment of the present disclosure may include an adhesive portion 40 formed in one end region on an interface between a separator 30 and an electrode 10 in a direction in which a tab 13, 23 of the electrode is located.

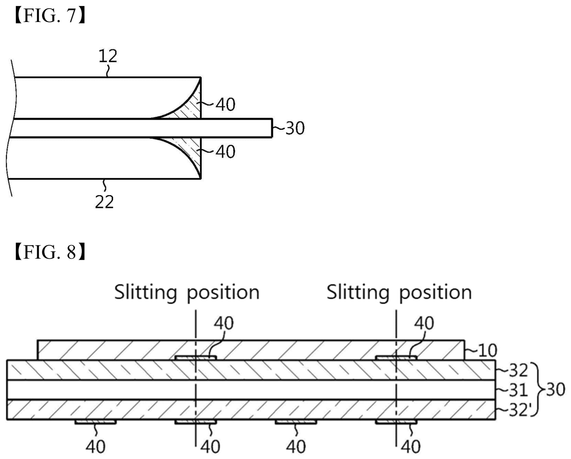

FIG. 7 illustrates a cross-sectional view of an electrode assembly according to one embodiment of the present disclosure. The electrode assembly according to one embodiment of the present disclosure may include an adhesive portion 40 formed on a surface of an interface between the separator and each of the electrode and the counter electrode, in at least one end region in a direction in which a tab of the electrode is located.
FIG. 8 illustrates a schematic view of a method for manufacturing an electrode assembly according to one embodiment of the present disclosure. The method for manufacturing an electrode assembly according to one embodiment of the present disclosure may include processes of forming an adhesive portion 40 at a predetermined interval on a separator 30, forming an electrode 10, and then slitting the position where the adhesive portion is formed.

### Mode for Invention

Hereinafter, the present disclosure will be described in detail.

In the present specification, a description of a certain part "including" certain components means that it may further include other components, and does not exclude other components unless particularly stated on the contrary.

In the present specification, the term "A and/or B" means "A or B, or both".

The present disclosure relates to an electrode assembly, and an electrochemical device including the same. Examples of the electrochemical device may include a primary battery, a secondary battery, a super capacitor, an electric double layer capacitor, and the like. More specifically, the secondary battery may be a lithium ion secondary battery.

Hereinafter, the electrode assembly and the electrochemical device of the present disclosure will be described in more detail with reference to drawings.

The electrode assembly according to one aspect of the present disclosure includes: an electrode; a separator; and a counter electrode, and the electrode and the counter electrode each include a tab extending from a current collector. Herein, at least one surface of an interface between the separator and at least one of the electrode and the counter electrode includes an adhesive portion formed in at least one end region in a direction in which the tab of the electrode is located thereon.

In one embodiment of the present disclosure, the separator may include an adhesive portion formed on both surfaces facing the electrode and the counter electrode, in at least one end in a direction in which the tab of the facing electrode is located.

Specifically, in one embodiment of the present disclosure, the electrode assembly may include an adhesive portion formed in each of one end region in a direction in which the tab of the electrode is located on the interface between the electrode and the separator and one end region in a direction in which the tab of the counter electrode is located on the interface between the counter electrode and the separator.

FIG. 6 illustrates a top view of the electrode assembly according to one embodiment of the present disclosure. Referring to FIG. 6, the electrode assembly 1 is provided with an electrode 10 and a counter electrode (not shown) on both sides with a separator 30 interposed therebetween, and herein, an adhesive portion 40 is provided between the separator and the electrode in one end region in a direction in which the tab portion 13, 23 of the electrode is located.

In one embodiment of the present disclosure, the adhesive portion may be, for example, formed in a 10% width region from one end based on 100% of the total width of the separator. Specifically, the adhesive portion may be formed to a constant thickness in a 0% to 10% or 0% to 5% width region from one end based on 100% of the total width of the separator.

In the present specification, the width of the separator refers to a length in a direction in which the adhesive portion extends from one end of the adhesive portion-formed separator. For example, in the electrode assembly including the separator, when the position of the separator located at an edge where the electrode tab is formed is employed as a 0% width and the position of the separator located at an edge opposite thereto is employed as a 100% width, it is preferred that the adhesive portion is formed to a constant thickness in a region from a 0% width to a 10% or 5% width in terms of low resistance of the electrode assembly, however, the present disclosure is not limited thereto.

According to one embodiment of the present disclosure, the electrode assembly may include a rectangle-shaped electrode and separator, and herein, the width of the separator may be measured based on a direction in which the electrode tab of the electrode assembly is located. In other words, the total width of the separator refers to a width of the separator in a direction in which the electrode tab is formed, and it means that the adhesive portion may be formed in a 10% width region from one end where the tab of the electrode assembly is formed.

In one embodiment of the present disclosure, the separator may have a total width of, for example, 5 mm to 800 mm, however, the present disclosure is not limited thereto.

According to one embodiment of the present disclosure, forming the adhesive portion in the above-described region may be preferred in terms of improving adhesive strength between the electrode and the separator by the adhesive portion, and maintaining electrochemical performance of the electrode assembly while being effective in preventing a phenomenon of short circuit (short) between the electrodes, however, the present disclosure is not limited thereto.

FIG. 7 illustrates a cross-sectional view of the electrode assembly according to one embodiment of the present disclosure. Referring to FIG. 7, the electrode assembly may prevent or improve separation between the electrode and the separator by providing the adhesive portion between the separator and the electrode at one end in a direction of the tab portion of the electrode where separation between an electrode and a separator typically occurs.

Referring to FIG. 7, the adhesive portion 40 is formed at one end of the electrode assembly, and therefore, the adhesive portion is not included on an inner side area of the interfaces between the electrode 12, 22 and the separator 30. Herein, it is preferred that the adhesive portion is formed thinly so as to uniformly maintain the total thickness of the electrode assembly.

In one embodiment of the present disclosure, the adhesive portion is formed in one end region of the interface between the separator and the electrode, and, for example, may be formed to have a thickness (height) of 0.5 µm to 2 µm. Forming the adhesive portion to the above-described thickness may have advantages of having no or minimal variation in the electrode assembly thickness between the region in which the adhesive portion is not formed and the region in which the adhesive portion is formed, however, the present disclosure is not limited thereto.

In the present specification, the thickness of the adhesive portion may be measured according to a known method for measuring a thickness of each component of the separator, and, for example, may be measured using a thickness measuring device of Mitutoyo Corporation, however, the measurement method is not limited thereto.

According to one embodiment of the present disclosure, the adhesive portion may include an adhesive binder. Examples of the adhesive binder may include an acrylic polymer, a rubber-based polymer, a cellulose-based polymer, a PVDF-based polymer, polyvinyl alcohol (PVA), polyvinyl pyrrolidone (PVP), polyacrylamide (PAM) or a mixture of two or more thereof. Examples of the acrylic polymer may include polyalkyl (meth)acrylate and the like. The 'alkyl' may be a C1 to C5 alkyl, but is not particularly limited. The rubber-based polymer may be a rubber-based polymer including at least one butadiene unit, and examples thereof may include, but are not limited to, polybutadiene rubber, styrene-butadiene rubber, nitrile butadiene rubber and the like. The cellulose-based polymer is a generic term for cellulose and cellulose derivatives, and examples thereof may include, but are not limited to, cellulose, carboxy methyl cellulose, hydroxy ethyl cellulose, hydroxy propyl cellulose, hydroxy propyl methyl cellulose phthalate and the like. The PVDF-based polymer may be a generic term for polymers including vinylidene fluoride as a monomer such as polyvinylidene fluoride (PVDF) and polyvinylidene-co-hexafluoropropylene, but is not limited thereto.

In one embodiment of the present disclosure, the separator separates or insulates the positive electrode and the negative electrode from each other, and enables lithium ion transport between the positive electrode and the negative electrode. The separator may be used without particular limit as long as it is commonly used in an electrochemical device. For example, the separator may be provided in a film-like shape.

In one embodiment of the present disclosure, the separator may include: a polymer substrate; and a porous coating layer formed on at least one surface of the polymer substrate and including inorganic particles and a binder. Herein, the adhesive portion may be formed on a partial region of the porous coating layer surface.

Hereinafter, constitutions of the porous substrate and the porous coating layer will be illustratively described.

In one embodiment of the present disclosure, the porous substrate refers to a substrate having a plurality of pores formed therein as a porous ion-conducting barrier that allows ions to pass through while blocking electrical contact between the negative electrode and the positive electrode. The pores are interconnected to each other, allowing gas or liquid to pass from one side surface to the other side surface of the substrate.

In one embodiment of the present disclosure, a porous polymer film including a thermoplastic resin may be used as the porous substrate in terms of providing a shut-down function. Herein, the shut-down function refers to a function in which, when a battery temperature increases, the thermoplastic resin melts and closes pores of the porous substrate, thereby blocking ion migration and preventing thermal runaway of the battery.

In one embodiment of the present disclosure, as the thermoplastic resin used in the porous substrate, a thermoplastic resin having a temperature of lower than 200°C may be preferred. In addition, the thermoplastic resin may be used without particular limit as long as it may be used as, for example, a substrate of a separator. Examples thereof may include polyolefin, polyethylene terephthalate, polybutylene terephthalate, polyacetal, polyamide, polycarbonate, polyimide, polyetheretherketone, polyethersulfone, polyphenylene oxide, polyphenylene sulfide, polyethylene naphthalene or a mixture of two or more thereof, but are not limited thereto.

In one embodiment of the present disclosure, the porous substrate may be a polyolefin substrate.

In one embodiment of the present disclosure, the porous coating layer includes inorganic particles and further includes a binder resin, such that all or at least a portion of the surfaces of the inorganic particles are coated with the binder resin. Herein, the inorganic particles are surface bound and/or point bound through the binder resin as a medium. For example, in the porous coating layer, the inorganic particles and the binder resin may be included in a weight ratio of 95:5 to 50:50. The porous coating layer has structural characteristics of a porous layer in which there are a number of micropores therein, and these micropores are interconnected, allowing gas or liquid to pass from a surface on one side to a surface on the other side.

In one embodiment of the present disclosure, the porous coating layer may have a porous structure derived from pores formed by the interstitial volume between the inorganic particles. The size or porosity of the pores (pore volume ratio) may be adjusted depending on the particle size and size distribution. Through such a structure, resistance to metallic foreign substances present in the electrode increases, and at the same time, shrinkage of the porous polyolefin substrate is suppressed, resulting in the effect of strengthening safety of an electrochemical device.

In one embodiment of the present disclosure, the porous coating layer includes a plurality of nodes including the inorganic particles and the binder polymer covering at least a portion of the surfaces of the inorganic particles; and one or more filaments formed from the binder polymer of the node in a thread shape. The filament is provided with a node-connecting portion extending from the node to connect another node, and the node-connecting portion may have a structure in which the plurality of filaments derived from the binder polymer cross each other to form a three-dimensional network structure.

In one embodiment of the present disclosure, the porous coating layer may be formed using a safety reinforced separator (SRS) manufacturing method, a ceramic coated separator (CCS) manufacturing method, or other known manufacturing methods, however, the method is not limited thereto.

In one embodiment of the present disclosure, the inorganic particles may be used without particular limit as long as they are electrochemically stable. In other words, the inorganic particles that may be used in the present disclosure are not particularly limited as long as they do not undergo oxidation and/or reduction reaction in an operating voltage range (for example, 0 V to 5 V based on Li/Li+) of an electrochemical device in which they are used. Nonlimiting examples of such inorganic particles may include BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, SiC, TiO₂ and the like, and one, or two or more thereof may be included.

In one embodiment of the present disclosure, when the porous coating layer includes a binder resin, examples of the binder resin may include a polyvinylidene fluoride-based resin (PVdF-based resin). In one embodiment of the present disclosure, the PVdF-based resin may include at least one of a homopolymer of vinylidene fluoride (that is, polyvinylidene fluoride), a copolymer with a monomer copolymerizable with vinylidene fluoride, and a mixture thereof. In one embodiment of the present disclosure, examples of the monomer may include a fluorinated monomer, a chlorine-based monomer and/or the like. Nonlimiting examples of the fluorinated monomer may include vinyl fluoride; trifluoroethylene (TrFE); chlorofluoroethylene (CTFE); 1,2-difluoroethylene; tetrafluoroethylene (TFE); hexafluoropropylene (HFP); perfluoro(alkylvinyl)ether such as perfluoro(methylvinyl)ether (PMVE), perfluoro(ethylvinyl)ether (PEVE) and perfluoro(propylvinyl)ether (PPVE); perfluoro(1,3-dioxol); perfluoro(2,2-dimethyl-1,3-dioxol) (PDD), and the like, and one or more thereof may be included.

In one embodiment of the present disclosure, the first porous coating layer and the second porous coating layer may have the same composition, but may be formed with different compositions as needed, and the present disclosure is not limited thereto.

In one embodiment of the present disclosure, the binder in the porous coating layer may be the same as or different from the adhesive binder of the adhesive portion, and may be selected independently of them.

Hereinafter, other constitutions of the electrode assembly according to one aspect of the present disclosure will be described in detail.

In one embodiment of the present disclosure, when the electrode is a positive electrode, the counter electrode may be a negative electrode, and when the electrode is a negative electrode, the counter electrode may be a positive electrode.

### Positive Electrode

As described above, the positive electrode includes a current collector; an active material layer formed on at least one surface of the current collector; and an insulating coating portion formed around the entire outer periphery of the active material layer.

The current collector is not particularly limited as long as it supports the active material layer, and has high conductivity without inducing chemical changes to the corresponding battery. For example, copper, stainless steel, aluminum, nickel, titanium, palladium, baked carbon, copper or stainless steel of which surface is treated with carbon, nickel, silver or the like, an aluminum-cadmium alloy and the like may be used.

The current collector may have micro unevenness on the surface to strengthen binding strength with the positive electrode active material, and various forms such as films, sheets, foil, meshes, nets, porous bodies, foams and non-woven fabrics may be used.

The active material layer includes a positive electrode active material, and may further include a conductor, a binder, additives and the like.

In one embodiment of the present disclosure, examples of the positive electrode active material may include a lithium transition metal oxide; a lithium metal iron phosphate; lithium nickel-manganese-cobalt oxide; an oxide in which a portion of lithium nickel-manganese-cobalt oxide is substituted with other transition metals; or two or more thereof, but are not limited thereto. Specifically, examples of the positive electrode active material may include a layered compound such as lithium cobalt oxide (LiCoO₂) or lithium nickel oxide (LiNiO₂) or a compound substituted with one or more transition metals; lithium manganese oxide such as chemical formula Li₁₊ₓMn₂₋ₓO₄ (herein, x is 0 to 0.33), LiMnO₃, LiMn₂O₃ or LiMnO₂; lithium copper oxide (Li₂CuO₂); vanadium oxide such as LiV₃O₈, LiV₃O₄, V₂O₅ or Cu₂V₂O₇; Ni-site type lithium nickel oxide represented by a chemical formula LiNi₁₋ₓMₓO₂ (herein, M=Co, Mn, Al, Cu, Fe, Mg, B or Ga, and x=0.01 to 0.3); lithium manganese composite oxide represented by a chemical formula LiMn₂₋ₓMₓO₂ (herein, M=Co, Ni, Fe, Cr, Zn or Ta, and x=0.01 to 0.1) or Li₂Mn₃MO₈ (herein, M=Fe, Co, Ni, Cu or Zn); lithium metal phosphate LiMPO₄ (herein, M=Fe, CO, Ni or Mn); lithium nickel-manganese-cobalt oxide Li₁₊ₓ(NiₐCo_{b}Mn_{c})₁₋ₓO₂ (x=0 to 0.03, a=0.3 to 0.95, b=0.01 to 0.35, c=0.01 to 0.5, a+b+c=1); an oxide in which a portion of lithium nickel-manganese-cobalt oxide is substituted with aluminum Liₐ[Ni_{b}Co_{c}Mn_{d}Alₑ]_{1-f}M1_{f}O₂ (M1 is at least one selected from the group consisting of Zr, B, W, Mg, Ce, Hf, Ta, La, Ti, Sr, Ba, F, P and S, 0.8≤a≤1.2, 0.5≤b≤0.99, 0<c<0.5, 0<d<0.5, 0.01≤e≤0.1, 0≤f≤0.1); an oxide in which a portion of lithium nickel-manganese-cobalt oxide is substituted with other transition metals Li₁₊ₓ(NiₐCo_{b}Mn_{c}M_{d})₁₋ₓO₂ (x=0 to 0.03, a=0.3 to 0.95, b=0.01 to 0.35, c=0.01 to 0.5, d=0.001 to 0.03, a+b+c+d=1, M is any one selected from the group consisting of Fe, V, Cr, Ti, W, Ta, Mg and Mo), a disulfide compound; Fe₂(MoO₄)₃ and the like, but are not limited thereto.

In one embodiment of the present disclosure, the conductor is a material electrically connecting an electrolyte and the positive electrode active material, thereby performing a role of a path through which electrons migrate from the current collector to the positive electrode active material, and may be used without limit as long as it has conductivity as a component of the electrode physically distinct from carbon included in the sulfur-carbon composite.

In one embodiment of the present disclosure, as examples of the conductor, carbon black such as Super P, denka black, acetylene black, ketjen black, channel black, furnace black, lamp black, thermal black or carbon black; carbon derivatives such as carbon nanotubes or fullerene; conductive fibers such as carbon fiber or metal fiber; fluorinated carbon, aluminum, metal powder such as nickel powder; or conductive polymers such as polyaniline, polythiophene, polyacetylene or polypyrrole may be used either alone or as a mixture.

In one embodiment of the present disclosure, the content of the conductor may be 0% by weight to 10% by weight, for example, 1% by weight to 10% by weight with respect to the total weight of the active material layer. When the content of the conductor is less than the above-mentioned range, electron transfer between the positive electrode active material and the current collector does not readily occur, reducing voltage and capacity, and when the content is greater than above-mentioned range on the contrary, the ratio of the positive electrode active material relatively decreases, reducing total energy (charge) of a battery, and therefore, it is preferred to determine a proper content within the above-described range.

In one embodiment of the present disclosure, the positive electrode active material layer includes a positive electrode active material and a binder polymer, and may not include a conductor. This has an advantage of allowing the positive electrode to include more positive electrode active material since it does not include a conductor.

In one embodiment of the present disclosure, the positive electrode binder keeps the positive electrode active material on the positive electrode current collector, and organically connects the positive electrode active materials to further increase binding strength therebetween, and all binder polymers known in the art may be used.

In one embodiment of the present disclosure, the binder in the positive electrode active material layer may be the same as or different from the binder of the insulating coating portion, that is, first adhesive binder and/or second adhesive binder, and may be selected independently of them.

In one embodiment of the present disclosure, examples of the binder in the positive electrode active material layer may include a fluororesin-based binder including polyvinylidene fluoride (PVdF), polytetrafluoroethylene(PTFE) or the like; a rubber-based binder including styrene-butadiene rubber (SBR), acrylonitrile-butadiene rubber, styreneisoprene rubber or the like; a cellulose-based binder including carboxyl methyl cellulose (CMC), starch, hydroxy propyl cellulose, regenerated cellulose or the like; a polyalcohol-based binder; a polyolefin-based binder including polyethylene, polypropylene or the like; a polyimide-based binder; a polyester-based binder; a polyacrylic binder such as polyacrylic acid (PAA); a silane-based binder; a polyurethane-based binder; or a mixture of two or more thereof. In addition, the binder polymer may include a copolymer having a repeating unit derived from two or more types of these binders.

In one embodiment of the present disclosure, the content of the binder polymer may be 0.5 wt% to 30 wt% with respect to a total 100 wt% of the positive electrode active material layer. When the content of the binder polymer satisfies such a range, physical properties of the positive electrode are improved, preventing a phenomenon of separation between the active material and the conductor in the positive electrode, and battery capacity may be secured by properly controlling the ratio between the active material and the conductor in the positive electrode.

### Negative Electrode

The negative electrode may include a negative electrode current collector; and a negative electrode active material layer coated on one surface or both surfaces of the negative electrode current collector. Alternatively, the negative electrode may be a lithium metal plate.

The negative electrode current collector is for supporting the negative electrode active material layer, and description thereof is the same as the description provided for the positive electrode current collector.

The negative electrode active material layer may include a conductor, a binder and the like in addition to the negative electrode active material. Herein, the conductor and the binder are as described above.

The negative electrode active material may include a material capable of reversibly intercalating or deintercalating lithium (Li⁺), a material capable of reacting with lithium ions to reversibly form a lithium-containing compound, lithium metal or a lithium alloy.

Examples of the material capable of reversibly intercalating or deintercalating lithium ions (Li⁺) may include crystalline carbon, amorphous carbon or a mixture thereof. Examples of the material capable of reacting with lithium ions (Li⁺) to reversibly form a lithium-containing compound may include tin oxide, titanium nitrate or silicon. Examples of the lithium alloy may include an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn).

According to another aspect of the present disclosure, there is provided a method for manufacturing the electrode assembly described above.

The method for manufacturing the electrode assembly may include:
(S1) forming an adhesive portion spaced apart at a predetermined interval on at least one surface of a separator film;
(S2) positioning an electrode on the adhesive portion-formed surface;
(S3) slitting the adhesive portion-formed region; and
(S4) forming a tab by notching in the region of the slit electrode in contact with the adhesive portion.

FIG. 8 illustrates a schematic view of the method for manufacturing the electrode assembly according to one embodiment of the present disclosure.

Referring to FIG. 8, the manufacturing method may include: forming an adhesive portion spaced apart at a predetermined interval on at least one surface of the separator film; forming an electrode thereon; and then slitting the adhesive portion-formed region.

First, step (S1) is a step of forming an adhesive portion spaced apart at a predetermined interval on at least one surface of a separator film having a long strip shape. In the present specification, the separator film is referred to as a separator film to distinguish it from the 'separator' included in the electrode assembly manufactured after slitting, and the structure of the separator film employs the structure of the separator except that the separator film is long.

In one embodiment of the present disclosure, the adhesive portion is formed on at least one of the surfaces of the separator film where the electrodes are formed afterward. When an electrode and a counter electrode are each formed on both surfaces of the separator film, it may be preferred that the adhesive portion is formed on both surfaces of the separator film.

In one embodiment of the present disclosure, the method for forming the adhesive portion may be used without particular limit as long as it is a known coating technology capable of forming a consistent pattern, and examples thereof may include slot die coating, inkjet coating, micro gravure coating, curtain coating and the like.

Then, step (S2) is a step of forming an electrode on the adhesive portion-formed surface. This step is performed according to a known method for forming an electrode during the electrode assembly manufacturing method, and description thereof is not included in the present specification.

After that, step (S3) is a step of slitting the adhesive portion-formed region. Specifically, this step is performed to improve the phenomenon of separation between the separator and the electrode in the slitting region by adjusting the slitting region to the position of adhesive portion formed between the separator and the electrode during the electrode assembly manufacturing.

In one embodiment of the present disclosure, a specific process for the slitting is performed according to a known method, and description thereof is not included in the present specification.

Then, step (S4) is a step of forming a tab portion in the electrode assembly. In the electrode assembly, the tab portion is formed by extending the electrode in a direction in which the adhesive portion is formed between the separator and the electrode, and the electrode tab is formed by notching after slitting the electrode assembly.

In one embodiment of the present disclosure, the notching process for forming the electrode tab is performed according to a known method, and description thereof is not included in the present specification.

The electrode assembly manufactured using the above-described method may exhibit, by providing the adhesive portion between the electrode and the separator in at least one end region in a direction in which the tab of the electrode is located, advantages of improving the phenomenon of separation between the electrode and the separator, and thereby improving short circuit safety between the electrodes. However, the mechanism of the present disclosure is not limited thereto.

According to still another aspect of the present disclosure, there may be provided an electrochemical device in which the electrode assembly described above is stored in a case.

In one embodiment of the present disclosure, those commonly used as a battery case may be adopted as the case, and the case is not particularly limited to external shapes depending on battery applications. For example, the case may have a cylinder-shape, a prism-shape, a pouch-shape or a coin-shape using a can.

Once the electrode assembly as above is completed, it may be stored in a case and sealed using a common method to manufacture an electrochemical device, and herein, the electrochemical device may be, for example, a lithium secondary battery.

### [Reference Numeral]

1: Electrode Assembly
10: Positive Electrode
11: Positive Electrode Current Collector
12: Positive Electrode Active Material Layer
13: Positive Electrode Tab
20: Negative Electrode
21: Negative Electrode Current Collector
22: Negative Electrode Active Material Layer
23: Negative Electrode Tab
30: Separator
31: Porous Substrate
32, 32': Porous Coating Layer
40: Adhesive Portion

## Claims

1. An electrode assembly comprising:
an electrode;
a separator; and
a counter electrode,
wherein the electrode and the counter electrode each include a tab extending from a current collector, and
at least one surface of an interface between the separator and at least one of the electrode and the counter electrode includes an adhesive portion formed in at least one end region in a direction in which the tab of the electrode is located.

2. The electrode assembly of claim 1, which includes an adhesive portion formed in each of one end region in a direction in which the tab of the electrode is located on the interface between the electrode and the separator and one end region in a direction in which the tab of the counter electrode is located on the interface between the counter electrode and the separator.

3. The electrode assembly of claim 1, wherein the adhesive portion is formed in a 10% width region from one end based on 100% of the total width of the separator.

4. The electrode assembly of claim 1, wherein the separator has a total width of 5 mm to 800 mm.

5. The electrode assembly of claim 1, wherein the adhesive portion has a thickness of 0.5 µm to 2 µm.

6. The electrode assembly of claim 1, wherein the separator includes: a polymer substrate; and a porous coating layer formed on at least one surface of the polymer substrate and including inorganic particles and a binder, and the adhesive portion is formed on a partial region of a surface of the porous coating layer.

7. A method for manufacturing an electrode assembly, the method comprising:
(S1) forming an adhesive portion spaced apart at a predetermined interval on at least one surface of a separator film;
(S2) positioning an electrode on the adhesive portion-formed surface;
(S3) slitting the adhesive portion-formed region; and
(S4) forming a tab by notching in the region of the slit electrode in contact with the adhesive portion.

8. The method of claim 7, wherein step (S1) includes forming an adhesive portion on each of both surfaces of the separator, and step (S2) includes positioning an electrode and a counter electrode on both surfaces of the adhesive portion-formed separator.

9. An electrochemical device comprising the electrode assembly of any one of claims 1 to 6 stored in a case.
